# EUROPEAN PATENT SPECIFICATION

(11) **EP 2 568 025 B1**
(45) Date of publication and mention of the grant of the patent: **04.06.2014**
(21) Application number: 12006369.8
(22) Date of filing: 11.09.2012
(51) Int. Cl.: C09J 7/02, B05D 5/10, B32B 37/15

(54) **Method and apparatus for producing a film coated with photo-reactivelayers**
Verfahren und Vorrichtung zur Herstellung eines Films mit photoreaktiven Beschichtung
Procédé et appareil de production d'un film avec des couches photoréactives

(30) Priority: 12.09.2011 JP 2011198119
(43) Date of publication of application: 13.03.2013
(73) Proprietor: Nitto Denko Corporation, Osaka 567-8680 (JP)
(72) Inventor: Fukunaga Hajime, Osaka 567-8680 (JP); Morimoto Masakazu, Osaka 567-8680 (JP); Akiyama Jun, Osaka 567-8680 (JP)
(74) Representative: Hauck Patent- und Rechtsanwälte

(56) References cited:
- JP-A- 6 025 625
- JP-A- 2003 145 012
- JP-A- 2011 093 959

## Description

### BACKGROUND OF THE INVENTION

### 1. Field of the Invention

This invention relates to a method and an apparatus for producing a photo-reaction product sheet in which light is applied to a photo-reactive composition layer formed on a sheet-like, a tape-like, or a film-like support to undergo photo-reaction, thereby obtaining a photo-reaction product layer.

### 2. Description of the Related Art

Conventionally, a well-known photo-reaction product sheet is produced as under. Specifically, a photo-reactive composition layer in appropriate thickness is coated on a film-like support. The coated photo-reactive composition layer undergoes polymerization reaction through light irradiation, whereby a photo-reaction product layer is obtained. Examples of the photo-reaction product sheet include a pressure-sensitive adhesive sheet, a base material, a film, and a sheet formed as the support. The pressure-sensitive adhesive sheet has a photo-polymerizable composition layer for the photo-reactive composition layer, and forms a pressure sensitive adhesive layer by polymerizing the formed photo-reactive composition layer through light irradiation. The support is used as an adhesive sheet that is formed through crosslinking reaction of a photo-reactive composition with light for gelation.

In such a production method, the photo-reactive composition layer is coated on the support while the support is repeatedly supplied and moved. The coated support is irradiated with light, and the irradiated support is wound up.

The photo-reactive composition undergoes photo-polymerization while irradiation intensity of ultraviolet rays to an ultraviolet curable sheet is changed at appropriate timing, and a thus polymerization rate is controlled. For instance, in the first step, ultraviolet rays are applied with given intensity of illuminance, and a fixed amount of photo-reactive composition is polymerized. In the second step, ultraviolet rays are applied with higher intensity of illuminance than in the first step, whereby increasing a polymerization rate of the ultraviolet curable sheet. See Japanese Patent Publications No. JP-A-H02-60981, JP-A-H06-504809, and JP-A-H07-331198.

In another method, in the first step, an ultraviolet curable sheet is irradiated with ultraviolet rays with given intensity of illuminance, and a fixed amount of photo-reactive composition is polymerized. In the second step, ultraviolet rays are applied with lower intensity of illuminance than in the first step, whereby increasing a polymerization rate of the ultraviolet curable sheet and a production rate. See Japanese Patent Publication No. JP-A-H03-285974.

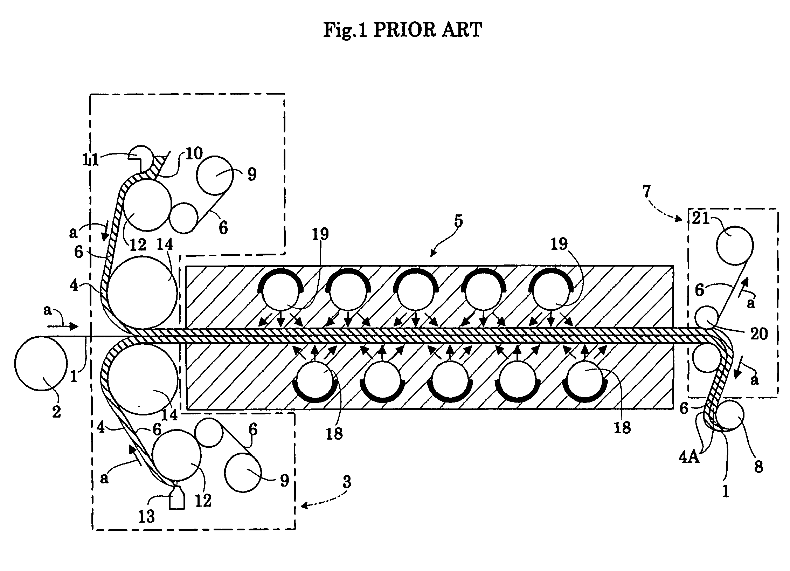

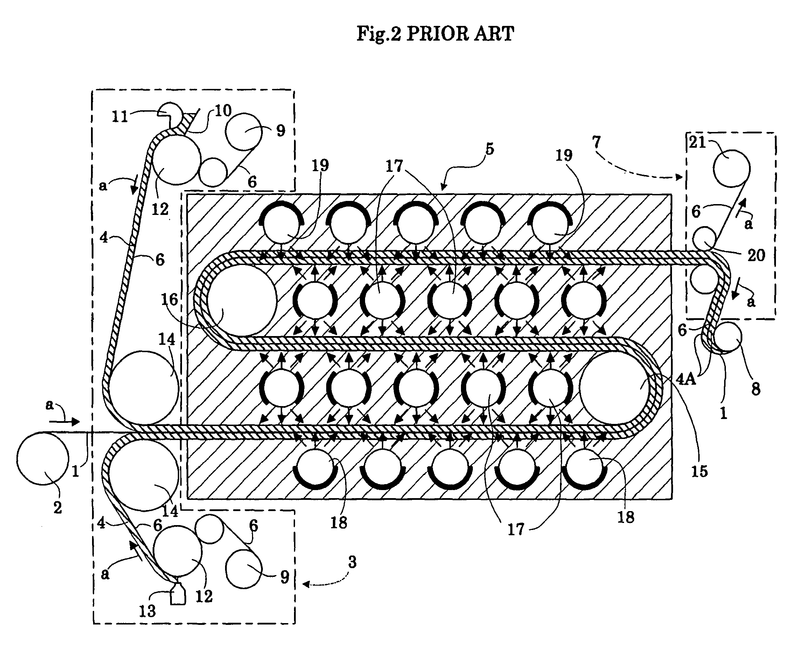

Moreover, in another method, as shown in Figure 1, a photo-reaction product sheet is transported between lamps for ultraviolet-ray emission. The lamps are arranged in a zigzag pattern. As shown in Figure 2, another method is disclosed in which a photo-reaction product sheet is repeatedly transported between lamps for ultraviolet-ray emission for two or more times, whereby light for ultraviolet ray polymerization is used efficiently. See Patent Publication No. JP-A-2003-145012.

The conventional methods, however, have the following drawbacks.

In the method of gradually changing ultraviolet-ray irradiation disclosed in JP-A-H02-60981, JP-A-H06-504809, JP-A-H07-331198, and JP-A-H03-285974, two or more types of lamps with different intensity have to be arranged in line. As a result, a production line becomes longer. In addition to this, two or more types of irradiation equipment have to be installed. Such disadvantage occurs.

Moreover, in the method adopted in JP-A-2003-145012, since the lamps are arranged closely in a narrow space, the photo-polymerizable composition may be damaged due to heat from the lamps. This causes a poor property of the photo-polymerizable composition. That is, it is substantially necessary to provide a distance between the lamps and the photo-polymerizable composition, and a pass line has to reciprocate for two or more times. As a result, a disadvantage may arise such as upsized equipment.

### SUMMARY OF THE INVENTION

This invention has been made regarding the state of the art noted above, and its primary object is to provide a method and an apparatus for producing a photo-reaction product sheet that enables effective production of a high-quality photo-reaction product sheet with a simplified apparatus configuration.

Additional features of the invention will be set forth in the description which follows, and in part will be apparent from the description, or may be learned by practice of the invention.

This invention is configured as under to achieve the above object. One example of this invention discloses a method of producing a photo-reaction product sheet through applying light from an illumination device to a photo-reactive composition layer formed on a support for undergoing photo-reaction, thereby obtaining a photo-reaction product layer. The method includes forming the photo-reactive composition layer on the support with transparency while moving the support in one direction; reversing the support at least once as to move the support in a direction opposite to the one direction to generate a serpentine transport path, whereby the supports prior to reverse and subsequent to reverse face to each other serpentinely; and irradiating the support with light from the illumination device, and photo-polymerizing every photo-reactive composition layer on the support serpentinely while transmitting light through the support and the photo-reactive composition layer formed on the support, the photo-reactive composition layer being a photo-polymerizable composition layer having transparency that is photo-polymerized by light from the illumination device to obtain a pressure sensitive adhesive layer.

According to the foregoing method, every photo-reactive composition on the support is photo-polymerized while light is transmitted through the support and the photo-reactive composition layer, the light being applied to the support with the photo-reactive composition formed thereon that is transported serpentinely. Thus light applied in one direction can be effectively used. Consequently, the photo-reaction product sheet can be produced with high efficiency by decreasing the number of lamps as an illumination device.

In the foregoing method, the illumination device may irradiate light with the support from outside of at least either the lowermost stage or the uppermost stage of the support that is reversed and transported serpentinely serpentinely.

In this method, when light is applied on one side, light intensity decreases as light transmits the support and the like. As a result, timing for promoting photo-polymerization is set for the upper stage or the lower stage. In addition, when the support is reversed for many times, light is applied on both the lowermost and uppermost stages. As a result, stable light intensity can be achieved.

Moreover, in this method, the light intensity of the illumination device to the support may be controlled by adjusting an irradiation distance of light through changing a diameter of a roller for reversing the support, or by control of output voltages of the illumination device.

The photo-reactive composition layer may be formed not only on one face of the support but also on both front and back faces of the support.

Moreover, the photo-reactive composition layer formed on an optical transparent separating liner is joined to the support. The support is irradiated with light while the photo-reactive composition layer is covered with the optical transparent separating liner, whereby the photo-reactive composition layer is photo-polymerized. Such process may be adopted.

According to this method, light acts on the photo-reactive composition layer while transmitting through the optical transparent separating liner. On the other hand, an unreacted photo-reactive composition is blocked by the optical transparent separating liner. Consequently, contamination and decrease in light illuminance of the illumination device due to the unreacted photo-reactive composition can be prevented. Particularly, where the photo-reactive composition is a photo-polymerizable composition layer that undergoes photo-polymerization by light from the illumination device to generate a pressure-sensitive adhesive layer, an unreacted monomer evaporates following photo-reaction of the photo-polymerizable composition layer (photo-polymerization.) Since the monomer is blocked by the optical transparent separating liner and adheres to the optical transparent separating liner, contamination and decrease in light illuminance of the illumination device due to the monomer can be prevented. Moreover, when the optical transparent separating liner is separated from the pressure-sensitive adhesive layer, only the optical transparent separating liner is separated while the pressure-sensitive adhesive layer is on the support.

Where the photo-reaction product sheet is generated by forming the photo-reactive composition layer on the support via such an optical transparent separating liner and forming on the support the photo-reaction production layer with the photo-reactive composition having undergone photo-reaction, a photo-reaction rate of the photo-reactive composition layer is preferably set to be 20% or more in order to avoid protrusion of the unreacted photo-reactive composition over the optical transparent separating liner upon reversing the support firstly.

Moreover, in the foregoing method, a laminate of the support and the photo-reactive composition (formed on one face or both faces), and a laminate composed of the support, the photo-reactive composition (formed on one face or both faces) and the optical transparent separating liner each have transmittance of 10% or more, preferably 30% or more, more preferably 50% or more. The number of times of reversing the support, the number of lamps, light intensity, etc. are appropriately modified in accordance with the transmittance.

This invention also adopts the configuration as stated below to accomplish such object.

Another example of this invention discloses an apparatus for producing a photo-reaction product sheet through applying light from an illumination device to a photo-reactive composition layer formed on a support for undergo photo-reaction, thereby obtaining a photo-reaction product layer. The apparatus includes a coating device for coating the photo-reactive composition layer onto the support with transparency while moving the support with transparency in one direction; and a reversing device for reversing the support so as to move in a direction opposite to the one direction, the photo-reactive composition layer being a photo-polymerizable composition layer having transparency that is photo-polymerized by light from the illumination device to obtain a pressure-sensitive adhesive layer, a transport path for the support being constructed serpentinely, and the illumination device irradiating with light the support transported serpentinely from outside of at least either the lowermost stage or the uppermost stage.

This configuration may achieve suitable implementation of the above method.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
Figures 1 and 2 are front views each showing a schematic configuration of the conventional apparatus.
Figure 3 is a schematic front view of an apparatus for producing a photo-reaction product sheet.
Figure 4 is a schematic front view of a modified apparatus for producing a photo-reaction product sheet.

### DESCRIPTION OF THE PREFERRED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

One embodiment of this invention will be described hereunder with reference to the drawings.

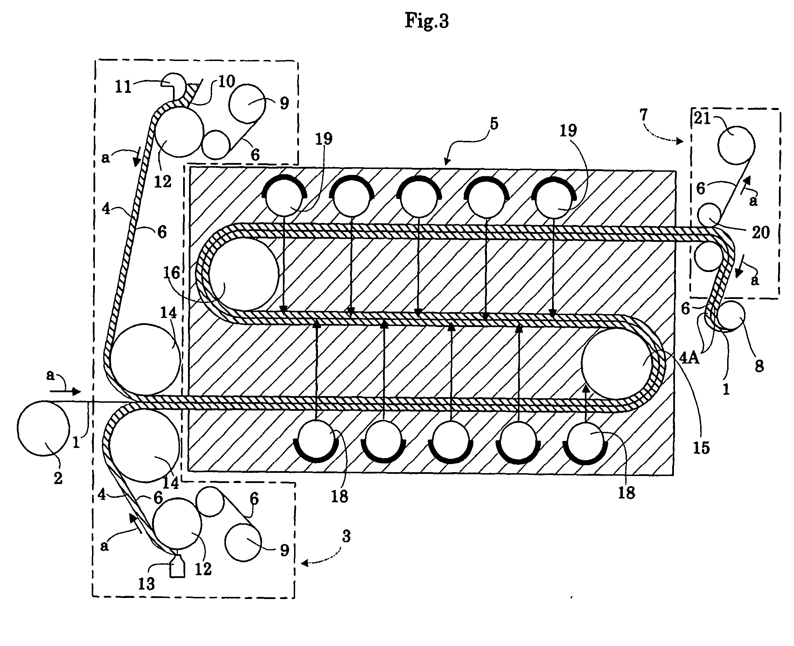

As shown in Figure 3, an apparatus for producing a photo-reaction product sheet according to one example of the invention includes a support supplying roll 2, a coating section 3, an illumination chamber 5, a separating section 7, and a support winding section 8. Each component will be described in detail hereinafter.

The support supplying roll 2 feed outs and supplies a sheet-like, tape-like, or film-like support (base material) 1.

The coating section 3 coats a photo-polymerizable composition in a given thickness onto the support 1 fed out from the support supplying roll 2 to form a photo-polymerizable composition layer 4. Here, the photo-polymerizable composition layer 4 corresponds to the photo-reactive composition in this example of the invention.

The illumination chamber 5 applies light to the photo-polymerizable composition (the photo-polymerizable composition layer 4) coated on the support 1.

The separating section 7 separates an optical transparent separating liner 6, mentioned later, from the support 1.

The support winding section 8 winds up the support 1 on which a pressure-sensitive adhesive layer 4A is provided. Each component will be described in detail hereinafter.

The band-shaped support 1 wound around the support supplying roll 2 is composed of a transparent material. For instance, a plastic film such as a polyester film is used as the support 1.

The photo-polymerizable composition layer 4 with transparency contains monomers or partially-polymerized monomers and a photo-polymerization initiator and is polymerized upon light irradiation, thereby being formed into a pressure-sensitive adhesive. Examples of the photo-polymerizable composition include an acrylic, polyester, or epoxy photo-polymerizable composition. Among them, the acrylic photo-polymerizable composition is particularly preferably used. Description will be given hereinafter of each component of the photo-polymerizable composition used in this example of the invention.

In this example of the invention, as the photo-polymerizable composition 9, monomers consisting of an alkyl acrylate monomer as a main component, and a copolymerizable monomer containing a polar group are preferably used. Examples of the alkyl acrylate monomer in this example of the invention include a vinyl monomer whose main component is a (meth)acrylic acid ester. More specifically, one or more monomers selected from those whose alkyl group has 1 to 14 carbon numbers are used as the main component, e.g., alkyl acrylate, alkyl metacrylate, in which the alkyl group may be partially substituted with hydroxy group; each of these contains an alkyl group, such as a methyl group, an ethyl group, a propyl group, a butyl group, an isobutyl group, a pentyl group, an isopentyl group, a hexyl group, a heptyl group, an octyl group, an isooctyl group, a nonyl group, an isononyl group, a decyl group, or an isodecyl group.

Moreover, examples of the copolymerizable monomer containing a polar group include an unsaturated acid, such as (meth)acrylate, itaconic acid, or 2-acrylamide propanesulphonic acid; a monomer containing a hydroxyl group, such as 2-hydroxyetyl(meth)acrylate, or 2-hydroxypropyl(meth)acrylate; and caprolactone(meth)acrylate. In addition, the copolymerizable monomer is not necessarily a monomer, and may be a dimer, such as a (meth)acrylic acid dimer.

Monomers comprising an alkyl acrylate monomer as the main component and a copolymerizable monomer containing polar groups are used in a ratio of 70 to 99 % by weight to 30 to 1 % by weight, more preferably 80 to 96 % by weight to 20 to 4 % by weight. When the above monomers are used in a ratio within the above ranges, a favorable balance in terms of adhesiveness, cohesive strength, and the like can be attained.

Moreover, examples of a photo-polymerization initiator include a benzoin ether, such as benzoin methyl ether or benzoin isopropyl ether; a substituted benzoin ether, such as anisole methyl ether; a substituted acetophenone such as 2,2-diethoxyacetophenone; or 2,2-dimethoxy-2-phenyl acetophenone; a substituted-α-ketol, such as 2-methyl-2-hydroxy propiophenone; an aromatic sulfonyl chloride, such as 2-naphtalene sulfonyl chloride; and a photoactive oxime, such as 1-phenyl-1,1-propanedione-2-(o-ethoxycarbonyl)-oxime. The usage amount of such a photo-polymerization initiator is preferably 0.01 to 5 parts by weight, and more preferably 0.1 to 3 parts by weight, with respect to 100 parts by weight of total of the monomers comprising alkyl acrylate monomers serving as the main component and the copolymerizable monomers containing a polar group. When the amount of the photo-polymerization initiator falls below the above range, the polymerization velocity is decreased, whereby monomers tend to remain in large quantity, which is unfavorable from an industrial viewpoint. In contrast, when the amount of the same exceeds the range, molecular weight of the polymer is reduced, which leads to a decrease in cohesive strength of the adhesive. As a result, preferable adhesive property cannot be obtained.

In addition, as a crosslinking agent in thie example of the invention, a polyfunctional acrylate monomer is used. Examples thereof include an alkyl aclylate monomer containing two or more functional groups, such as trimethylolpropane triacrylate, pentaerythritol tetraacrylate, 1,2-ethyleneglycol diacrylate, 1,6-hexanediol diacrylate, and 1,12-dodecanediol diacrylate. A usage amount of the multifunctional acylate monomer depends on the number of the functional groups, and is preferaby 0.01 to 5 parts by weight, and more preferably 0.1 to 3 parts by weight, with respect to 100 parts total of the monomer comprising the alkyl acrylate monomer serving as the main component and the copolymerizable monomer containing a polar group. When the multifunctional acylate monomer is used in a ratio within the above range, favorable cohesive strength is maintained.

In addition, another crosslinking agent other than the multifunctional acrylate may be used in combination, depending on the purposes of the adhesive. Examples of the crosslinking agent to be used in combination include those that are generally used, such as an isocyanate crosslinking agent, an epoxy crosslinking agent, and an aziridine crosslinking agent. In the present invention, additives such as a tackifier may be used as necessary.

In this example, the optical-transparent separating liner 6 having light transmittance of 70% or more is used, whereby required light transmittance can be acquired. The optical-transparent separating film 6 with light transmittance of 80% or more is more preferable, and that with visible light transmittance of 90% or more is more preferable. The optical-transparent separating film 6 has enough heat resistance to endure treatment within the illumination chamber 5. Examples of the optical-transparent separating film 6 with such properties include a polyester film. The dose of irradiation light transmitted through the optical-transparent separating film 6 is optionally set in accordance with properties required for such as the pressure-sensitive adhesive layer. Here in this example, the dose usually falls within a range of 100 to 30000 mJ/cm², more preferably of 1000 to 10000 mJ/cm², more preferably of 2000 to 8000 mJ/cm².

Light transmitted through the optical transparent separating liner 6 is not particularly limited in its wavelength. The wavelength is suitably selected in accordance with type and use of the photo-polymerizable composition layer. For instance, when the photo-polymerization initiator used for reaction has an absorption band for long wavelength ultraviolet radiation (e.g., 400 nm or more), an optical-transparent separating film having a wavelength around the absorption band with high optical transmittance can also be selected. Alternatively, where a photo-polymerization reaction is performed using light with visible light domain, an optical-transparent separating film with high optical transmittance of visible light domain may be selected.

For instance, where the photo-polymerizable composition layer is a pressure sensitive adhesive layer, the optical transparent separating liner 6 preferably has a property of cutting short wavelength light. The reason thereof is as under. That us, irradiation of the photo-polymerizable composition layer with light containing short wavelength decreases release properties of the base material 1 and the pressure-sensitive adhesive layer produced through photo-polymerization. Since this is inconvenient for a so-called double-faced adhesive sheet, light with short wavelength is cut through the optical transparent separating liner 6. Specifically, as the optical transparent separating liner 6, a film that enables to cut short wavelength light (e.g., of 300 nm or less) by 90% or more is preferable, more preferably by 93% or more, more preferably 95% or more.

Now reference is made again to Figure 3. The coating section 3 coats the photo-polymerizable composition 4 onto the front and back faces of the support 1 fed out from the support supplying roll 2 so as to have a given width and a given thickness in a width direction of the support 1. For instance, the coating section 3 is provided with a comma coater (fountain die coater). The comma coater is provided on a front face side of the support 1, whereas the die coater is provided on a back face side of the support 1. Here, the photo-polymerizable composition 4 to be coated on the front and back faces of the support 1 may contain the same composition, or may contain different compositions.

The comma coater includes an optical-transparent separating-liner supplying roll 9, a liquid supply tank 10, a comma roll 11, and a backup roll 12.

The optical-transparent separating-liner supplying roll 9 feed outs and supplies the optical transparent separating liner 6.

The liquid supply tank 10 supplies the photo-polymerizable composition 4 to the optical transparent separating liner 6 fed out from the optical-transparent separating-liner supplying roll 9.

The comma roll 11 coats the photo-polymerizable composition 4 supplied from the liquid supply tank 10 onto the optical transparent separating liner 6.

The backup roll 12 transports the optical transparent separating liner 6 with the photo-polymerizable composition 4 coated thereon on the front face of the support 1.

The die coater includes the optical-transparent separating-liner supplying roll 9, a lip coater 13, and the backup roll 12.

Similar to the front face side, the optical-transparent separating-liner supplying roll 9 feed outs and supplies the optical transparent separating liner 6.

The lip coater 13 coats the photo-polymerizable composition 4 onto the optical transparent separating liner 6 fed out from the optical-transparent separating-liner supplying roll 9.

The backup roll 12 transports the optical transparent separating liner 6 with the photo-polymerizable composition 4 coated thereon on the back face of the support 1.

The coating section 3 further includes a pair of upper and lower coating rolls 14 for joining the optical transparent separating liner 6 with the photo-polymerizable composition 4 coated thereon to both faces of the support 1 approximately simultaneously.

The optical transparent separating liner 6 with the photo-polymerizable composition (photo-polymerizable composition layer 4) coated thereon is joined to both faces of the support 1 approximately simultaneously with the coating roll 14. Thereby, the photo-polymerizable composition 4 is coated onto both the faces of the support 1. Here, the optical transparent separating liner 6 joined to the front and back faces of the support 1 may have the same property, or may have different properties.

The coating section 3 is not limited to the comma coater or the die coater mentioned above. It may be of another coating type, such as a reverse coater or a gravure coater. That is, an approach of controlling a thickness of the photo-polymerizable composition 4 can also vary appropriately in accordance with each coating type.

The illumination chamber 5 applies light to the photo-polymerizable composition layer 4 coated on both the faces of the support 1. The illumination chamber 5 is provided with a first transport roll 15, a second transport roll 16, two or more first lamps 18 for ultraviolet-ray emission, and two or more second lamps 19 for ultraviolet-ray emission.

The first transport roll 15 reverses the support 1 such that the support may be moved in a direction opposite to the moving direction of the support 1 fed out from the support supplying roll 2 (i.e., a-direction shown in Figure 3.)

The second transport roll 16 reverses the support 1 such that the support 1 may be moved in a direction opposite to the moving direction of the support 1 reversed by the first transport roll 15.

The first lamps 18 for ultraviolet-ray emission irradiate the rear face of the opposed faces of the support 1 with light until the first transport roll 15 firstly reverses the support 1.

The second transport roll 16 reverses the support 1 finally, and thereafter the second lamps 19 for ultraviolet-ray emission irradiate the back face of the opposed faces of the support 1.

The first and second lamps for ultraviolet-ray emission 18 and 19 correspond to the illumination device in this example of the invention. The first and the second transport rolls 15 and 16 correspond to the reversing device in this example of the invention.

As the lamp for ultraviolet-ray emission within the illumination chamber 5, a high-pressure discharge lamp, such as a metal halide lamp and a high pressure mercury lamp, and a low-pressure discharge lamp such as a chemical lamp, a black light lamp, and an insectivorous fluorescent lamp may be used. In addition to this, an electrodeless UV lamp that emits light through converting microwave generated by a magnetron into light energy, or an ultraviolet wavelength LED (Light Emitting Diode) with light-emitting elements of an ultraviolet wavelength may be adopted. Moreover, combination of two or more types of lamps may be adopted.

Where the photo-polymerizable composition 4 is coated onto the support 1 using the optical transparent separating liner 6, when a polymerization rate is low upon first reverse of the support 1, i.e., upon reverse of the support 1 by the first transport roll 15, the monomer as the unreacted photo-polymerizable composition protrudes over the optical transparent separating liner 6. In order to avoid this, illuminance of the first lamps for ultraviolet-ray emission 18 (occasionally, also illuminance of the second lamps for ultraviolet-ray emission 19) is preferably set such that the polymerization rate is 20% or more upon first reverse of the support 1. Moreover, it is more preferably that illuminance of the first and second lamps for ultraviolet-ray emission 18, 19 is preferably set such that the polymerization rate is 50% or more. Furthermore, it is more preferably that illuminance of the first and second lamps for ultraviolet-ray emission 18 and 19 is preferably set such that the polymerization rate is 70% or more. The illuminance of the first and second lamps for ultraviolet-ray emission 18 and 19 influences the degree of polymerization of the polymer obtained through photo-polymerization. Thus the illuminance is 0.1 to 5000m/cm², preferably 1 to 1000m W/cm², more preferably 1to 100mW/cm².

Wrinkles may occur upon reverse of the support 1. Thus a film thickness of coating the photo-polymerizable composition 4 is preferably 400 µm or less. In addition a rotation diameter upon reverse is preferably 300 mm or more. This can be easily achieved by an approach of setting a diameter of the transport roll to be 300 mm or more, or combination of two or more transport rolls having a diameter smaller than 300 mm. These approaches are not limitative. Any reversing device can be adopted.

Upon first reverse of the support 1, i.e., upon reverse of the support 1 by the first transport roll 15, the apparatus according to this example of the invention is controlled such that a polymerization rate of the photo-polymerizable composition layer 4 is at least 20% or more. A rate of photo-polymerization of the photo-polymerizable composition layer 4 of 20% or more is detected as under. That is, irradiation experiments are conducted, under various conditions such as irradiation quantity in the illumination chamber 5 (i.e., the first and second lamps for ultraviolet-ray emission 18, 19), to a sample with the photo-polymerizable composition 4 pursuant to specifications of the product to be manufactured being coated onto the support 1. The detection can be obtained experimentally through determining the r photo-polymerization rate of the sample after the experiment. The photo-polymerization rate is determined, for example, through determining a rate of residue (weight subsequent to heating/weight prior to heating x 100) upon heating with an air forced oven at 130°C for two hours.

The separating section 7 includes a separation roll 20 and a winding roll 21.

The separation roll 20 separates the optical transparent separating liner 6 on the front face side of the support 1.

The winding roll 21 winds up the separated optical transparent separating liner 6.

In the separating section 7, the optical transparent separating liner 6 on the front face side of the support 1 that is separated by the separation roll 20 is wound by the winding roll 21. The support 1 and the optical transparent separating liner 6 on the back face side of the support 1 are integrally wound by the support winding section 8. Upon this, it is desirable to provide a wind correction device for preventing weaving. The optical transparent separating liner 6 on the front face side of the support 1 is separated from the support 1. Thereby the support 1 includes on both faces thereof a pressure-sensitive adhesive 4A obtained by photo-polymerizing the photo-polymerizable composition layer 4 through light irradiation. Moreover, the support 1 includes the optical transparent separating liner 6 joined to the back face thereof.

Examples will be described hereinafter. The examples are an example of a pressure-sensitive adhesive sheet obtained by the apparatus shown in Figure 3, a comparative example of a pressure-sensitive adhesive sheet obtained by the conventional apparatus shown in Figure 1 without reversing the sheet and without using transmitted light, and a comparative example of a pressure-sensitive adhesive sheet obtained by the conventional apparatus shown in Figure 2 having the lamps arranged in a zigzag pattern.

### <Example>

A siliconized polyethylene film of 38µm was used for the optical transparent separating liner 6 for cutting short-wavelength light in photo-polymerization.

Photo-polymerizable composition was obtained as follows. 90 parts by weight of 2-Ethylhexylacrylate (2EHA) as a main monomer consisting of an alkyl acrylate monomer, 10 parts by weight of acrylic acid (AA) as a copolymerizable monomer containing a polar group, and 0.05 parts by weight of 2 2-dimethoxy-2-phenyl acetophenone as a photo-polymerization initiator were placed in a four-neck flask, and partial photo-polymerization was performed by exposure to UV irradiation under a nitrogen atmosphere to give a partially polymerized syrup. Then 0.04 parts by weight of 1,6-hexanediol diacrylate as the crosslinking agent was added to 100 parts by weight of the partially polymerized syrup, and they were uniformly mixed to give a photo-polymerizable composition.

### <Examples 1 through 3>

Experiments using the apparatus shown in Figure 3 were performed. The photo-polymerizable composition 4 was coated on the support 1 in the coating section 3 such that the photo-polymerizable composition 4 has a thickness of 140µm including the support 1. 90 black lights were used for each the first lamp 18 for ultraviolet-ray emission and the second lamp 19 for ultraviolet-ray emission for illumination. Every illuminance of the black lights is set to be 6 mW/cm². The coating and photo-polymerization were conducted at a movement speed (line speed) of the support 1 of 2 m/min, 4 m/min, and 6 m/min, respectively, and polymerization rates of the photo-polymerizable composition were determined to obtain the examples.

### <Examples 4 through 6>

Experiments using the apparatus shown in Figure 3 were performed. The photo-polymerizable composition 4 was coated on the support 1 in the coating section 3 such that the photo-polymerizable composition 4 has a thickness of 140µm including the support 1. 10 metal halide lamps were used for each the first lamp 18 for ultraviolet-ray emission and the second lamp 19 for ultraviolet-ray emission for illumination. Every illuminance of the metal halide lamp is set to be 40 mW/cm². The coating and photo-polymerization were conducted at a movement speed (line speed) of the support 1 of 2 m/min, 4 m/min, and 6 m/min, respectively, and polymerization rates of the photo-polymerizable composition were determined to obtain the examples.

### <Examples 7 through 9>

Experiments using the apparatus shown in Figure 3 were performed. The photo-polymerizable composition 4 was coated on the support 1 in the coating section 3 such that the photo-polymerizable composition 4 has a thickness of 140µm including the support 1. 10 metal halide lamps were used for the first lamp 18 for ultraviolet-ray emission for illumination, and no lamp was used for the second lamp 19 for ultraviolet-ray emission. Every illuminance of the metal halide lamp is set to be 75 mW/cm². The coating and photo-polymerization were conducted at a movement speed (line speed) of the support 1 of 2 m/min, 4 m/min, and 6 m/min, respectively, and polymerization rates of the photo-polymerizable composition were determined to obtain the examples.

### <Examples 10 through 12>

Experiments using the apparatus shown in Figure 3 were performed. The photo-polymerizable composition 4 was coated on the support 1 in the coating section 3 such that the photo-polymerizable composition 4 has a thickness of 140µm including the support 1. 10 metal halide lamps were used for the second lamp 19 for ultraviolet-ray emission for illumination, and no lamp was used for the first lamp 18 for ultraviolet-ray emission. Every illuminance of the metal halide lamp is set to be 75 mW/cm². The coating and photo-polymerization were conducted at a movement speed (line speed) of the support 1 of 2 m/min, 4 m/min, and 6 m/min, respectively, and polymerization rates of the photo-polymerizable composition were determined to obtain the examples.

### <Comparative Examples 1 through 3>

Conditions described in Examples 1 through 3 were set and the conventional apparatus in Figure 1 was used to give comparative examples of a pressure-sensitive adhesive sheet obtained without reversing the sheet and without using transmitted light.

### <Comparative Examples 4 through 6>

Conditions described in Examples 4 through 6 were set and the conventional apparatus in Figure 1 was used to give comparative examples of a pressure-sensitive adhesive sheet obtained without reversing the sheet and without using transmitted light.

### <Comparative Examples 7 through 9>

Experiments using the apparatus shown in Figure 2 were performed. The photo-polymerizable composition 4 was coated on the support 1 in the coating section 3 such that the photo-polymerizable composition 4 has a thickness of 140µm including the support 1. 90 black lights were used for each of the first lamp 18 for ultraviolet-ray emission, the third lamp 17 for ultraviolet-ray emission on the first transport roll 15 side, the third lamp 17 for ultraviolet-ray emission on the second transport roll 16 side, and the second lamp 18 for ultraviolet-ray emission for illumination. Every illuminance of the black lights is set to be 6 mW/cm². The coating and photo-polymerization were conducted at a movement speed (line speed) of the support 1 of 2 m/min, 4 m/min, and 6 m/min, respectively, and polymerization rates of the photo-polymerizable composition were determined to obtain the comparative examples.

Table 1 hereunder is determination results of the polymerization rates of the photo-polymerizable composition as for each pressure-sensitive adhesive sheet according to the examples and the comparative examples.

**[Table 1]**

| | apparatus type | used lamp | the number of lamps | illuminance [mW/cm²] | transport speed [m/min] | polymerization rate |
|---|---|---|---|---|---|---|
| Example 1 | Exemplary apparat.us | both sides | 180 | 6 | 2 | 99.4 |
| Example 2 | | both sides | 180 | 6 | 4 | 99.6 |
| Example 3 | | both sides | 180 | 6 | 6 | 99.0 |
| Example 4 | | both sides | 20 | 40 | 2 | 99.6 |
| Example 5 | | both sides | 20 | 40 | 4 | 99.3 |
| Example 6 | | both sides | 20 | 40 | 6 | 99.0 |
| Example 7 | | upper side only | 10 | 75 | 2 | 99.2 |
| Example 8 | | upper side only | 10 | 75 | 4 | 98.9 |
| Example 9 | | upper side only | 10 | 75 | 6 | 98.6 |
| Example 10 | | lower side only | 10 | 75 | 2 | 99.6 |
| Example 11 | | lower side only | 10 | 75 | 4 | 99.1 |
| Example 12 | | lower side only | 10 | 75 | 6 | 98.8 |
| | | | | | | |
| Comparative Example 1 | Conventional apparatus in Figure 1 | both sides | 180 | 6 | 2 | 99.1 |
| Comparative Example 2 | | both sides | 180 | 6 | 4 | 97.9 |
| Comparative Example 3 | | both sides | 180 | 6 | 6 | 95.8 |
| Comparative Example 4 | | both sides | 20 | 40 | 2 | 98.9 |
| Comparative Example 5 | | both sides | 20 | 40 | 4 | 98.7 |
| Comparative Examples 6 | | both sides | 20 | 40 | 6 | 98.0 |
| | | | | | | |
| Comparative Example 7 | Conventional apparatus in Figure 2 | all lighted | 360 | 6 | 2 | 98.7 |
| Comparative Example 8 | | all lighted | 360 | 6 | 4 | 98.4 |
| Comparative Example 9 | | all lighted | 360 | 6 | 6 | 98.0 |

According to the foregoing comparative experiments, as is apparent from Table 1, the examples 1 through 6 using the apparatus of this invention are same as the comparative examples using the conventional apparatus in arrangement of lamps to be used, number of lamps, illuminance, and transport speed. On the other hand, the results were obtained that all the photo-polymerizable compositions produced by the apparatus of this invention each have a polymerizable rate higher than that produced by the conventional apparatus. That is, in the apparatus of this invention, the support 1 is reversed in a serpentine manner. Thereby, the lamps having the same number as the conventional apparatus can achieve a longer irradiation time per unit area of the support 1, which results in an enhanced polymerization rate.

Next, comparison is made between the examples 7 through 12 of this invention and the comparative examples 4 through 6 of the conventional apparatus. From the comparison, it is found that the number of lamps to be used in this invention arranged on either the upper side or the lower side is half the number of lamps in the conventional apparatus. The transportation speeds are the same. In the example of this invention, although the number of lamps decreases to the half, the serpentine support 1 can cause light to transmit through the support 1 and the photo-polymerizable composition 4, whereby an enhanced illumination per unit area can be obtained rather than in the conventional apparatus. As a result, as is apparent from Table 1, every polymerization rate of the produced photo-polymerizable composition in this invention exceeds that in the conventional apparatus.

Next, comparison is made between the examples 7 through 12 of this invention and the comparative examples 4 through 6 of the conventional apparatus. From the comparison, it is found that the number of lamps to be used in this invention arranged on either the upper side or the lower side is half the number of lamps in the conventional apparatus. The illumination and the transportation speeds are the same. In the example of this invention, although the number of lamps decreases to the half, every polymerization rate of the produced photo-polymerizable composition in this invention exceeds that in the conventional apparatus, which is apparent from Table 1.

Next, comparison is made between the examples 1 through 12 of this invention and the comparative examples 7 through 9 of the conventional apparatus. From the comparison, it is found that the number of lamps to be used in this invention is half or less of the number of lamps in the conventional apparatus. The illumination and the transportation speeds are the same. In the example of this invention, although the number of lamps decreases to the half, every polymerization rate of the produced photo-polymerizable composition in this invention exceeds that in the conventional apparatus, which is apparent from Table 1.

As noted above, in the apparatus according to the example of this invention, the illuminance of the photo-polymerizable composition 4 coated on the support 1 can be enhanced although the number of lamps decreases. Consequently, a stable product with a high polymerization rate can be manufactured.

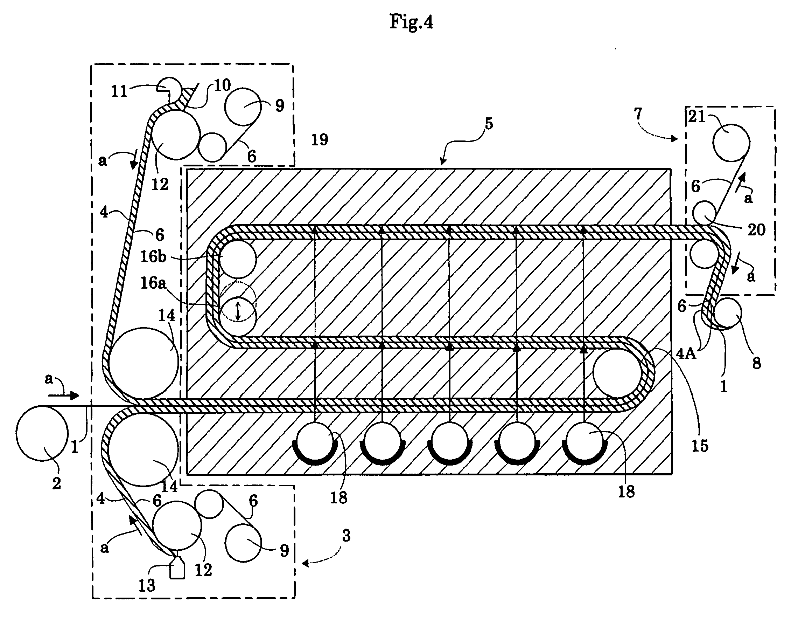

This invention may be embodied as the following aspects.
(1) The foregoing exemplary apparatus may have the lamps arranged on one side on the upperstream side of the transport path in Figure 3 as described in Examples 7 through 12. Alternatively, the lamps may be arranged on one side on the downstream side of the transport path.
(2) In the foregoing exemplary apparatus, the light intensity may be controlled through adjustment of the distance from the lamps to the support 1 by combination of transport rolls having different diameters. For instance, as shown in Figure 4, the first transport roll 15 has a diameter smaller than the first roll in the example of this invention and two second transport rolls 16a, 16b are provided. Such configuration may be adopted.

Specifically, when the first transport roll 15 is replaced with another roll having a larger diameter, upward and downward movement of the second transport roll 16a can cause the support 1 serpentinely to be moved horizontally. The foregoing configuration may further include second lamps 19 for ultraviolet-ray emission, similar to Figure 3.

Moreover, for controlling the light intensity, a filter may be provided between the transport path serpentinely. Alternatively, for controlling the light intensity, output voltages of the lamps 18 and 19 for ultraviolet-ray emission may be controlled. Furthermore, combination of these modifications may be adopted.

## Claims

1. A method of producing a photo-reaction product sheet through applying light from an illumination device to a photo-reactive composition layer formed on a support for undergoing photo-reaction, thereby obtaining a photo-reaction product layer, the method comprising:
forming the photo-reactive composition layer on the support while moving the support with transparency in one direction;
reversing the support at least once as to move the support in a direction opposite to the one direction to generate a serpentine transport path, whereby the supports prior to reverse and subsequent to reverse face to each other serpentinely; and
irradiating the support with light from the illumination device, and photo-polymerizing every photo-reactive composition layer on the support serpentinely while transmitting light through the support and the photo-reactive composition layer formed on the support,
the photo-reactive composition layer being a photo-polymerizable composition layer having transparency that is photo-polymerized by light from the illumination device to obtain a pressure-sensitive adhesive layer.

2. The method of producing the photo-reaction product sheet according to claim 1, wherein
the support is irradiated with light from outside of at least either the lowermost stage or the uppermost stage of the support that is reversed and transported serpentinely.

3. The method of producing the photo-reaction product sheet according to claim 1 or 2, wherein
intensity of light transmitted through the support on the transport path and the photo-reactive composition layer is controlled by adjusting an irradiation distance of light through changing a diameter of a roller for reversing the support.

4. The method of producing the photo-reaction product sheet according to any of claims 1 to 3, wherein
the intensity of light transmitted through the support on the transport path and the photo-reactive composition layer is controlled by output voltages of the illumination device.

5. The method of producing the photo-reaction product sheet according to any of claims 1 to 4, wherein
the photo-reactive composition layer is formed on both front and back faces of the support.

6. The method of producing the photo-reaction product sheet according to any of claims 1 to 5, wherein
the photo-reactive composition layer formed on an optical transparent separating liner is joined to the support, and
the support is irradiated with light while the photo-reactive composition layer is covered with the optical transparent separating liner, whereby the photo-reactive composition layer is photo-polymerized.

7. The method of producing the photo-reaction product sheet according to any of claims 1 to 6, further comprising:
setting a photo-reaction rate of the photo-reactive composition layer to be 20% or more upon first reverse of the support.

8. An apparatus for producing a photo-reaction product sheet through applying light from an illumination device to a photo-reactive composition layer formed on a support for undergo photo-reaction, thereby obtaining a photo-reaction product layer, the apparatus comprising:
a coating device for coating the photo-reactive composition layer onto the support with transparency while moving the support with transparency in one direction; and
a reversing device for reversing the support so as to move in a direction opposite to the one direction,
the photo-reactive composition layer being a photo-polymerizable composition layer having transparency that is photo-polymerized by light from the illumination device to obtain a pressure-sensitive adhesive layer,
a transport path for the support being constructed serpentinely, and
the illumination device irradiating with light the support transported serpentinely only from outside of at least either the lowermost stage or the uppermost stage.

## Patentansprüche

1. Verfahren zur Herstellung eines Films mit photoreaktiven Beschichtungen durch Applizieren von Licht von einer Beleuchtungseinrichtung auf eine photoreaktive Zusammensetzungsschicht, die auf einem Träger gebildet ist, um einer Photoreaktion unterzogen zu werden, wodurch eine Photoreaktionsproduktschicht erhalten wird, wobei das Verfahren umfasst:
Bilden der photoreaktiven Zusammensetzungsschicht auf dem Träger, während der Träger mit Transparenz in eine Richtung bewegt wird;
Mindestens einmaliges Umkehren des Trägers, sodass der Träger in eine entgegengesetzte Richtung zu der einen Richtung bewegt wird, um einen serpentinenförmigen Transportweg zu erzeugen, wodurch die Träger vor dem Umkehren und nach dem Umkehren einander serpentinenförmig zugewandt sind; und
Bestrahlen des Trägers mit Licht von der Beleuchtungseinrichtung und serpentinenförmiges Photopolymerisieren jeder photoreaktiven Zusammensetzungsschicht auf dem Träger, während Licht durch den Träger und die auf dem Träger gebildete photoreaktive Zusammensetzungsschicht gestrahlt wird,
wobei die photoreaktive Zusammensetzungsschicht eine photopolymerisierbare Zusammensetzungsschicht ist, die eine Transparenz aufweist, die durch Licht von der Beleuchtungseinrichtung photopolymerisiert wird, um einen druckempfindlichen Haftfilm zu erhalten.

2. Verfahren zur Herstellung des Films mit photoreaktiven Beschichtungen nach Anspruch 1, wobei
der Träger mit Licht von außen von mindestens entweder der untersten Ebene oder der obersten Ebene des Trägers bestrahlt wird, der umgekehrt und serpentinenförmig befördert wird.

3. Verfahren zur Herstellung des Films mit photoreaktiven Beschichtungen nach Anspruch 1 oder 2, wobei
die Stärke des Lichts, das durch den Träger auf dem Transportweg und die photoreaktive Zusammensetzungsschicht gestrahlt wird, durch Einstellen eines Bestrahlungsabstands des Lichts durch Ändern eines Durchmessers einer Rolle zum Umkehren des Trägers gesteuert wird.

4. Verfahren zur Herstellung des Films mit photoreaktiven Beschichtungen nach einem der Ansprüche 1 bis 3, wobei
die Stärke des Lichts, das durch den Träger auf dem Transportweg und die photoreaktive Zusammensetzungsschicht gestrahlt wird, durch Ausgangsspannungen der Beleuchtungseinrichtung gesteuert wird.

5. Verfahren zur Herstellung des Filmd mit photoreaktiven Beschichtungen nach einem der Ansprüche 1 bis 4, wobei
die photoreaktive Zusammensetzungsschicht sowohl auf der Vorder- als auch auf der Rückfläche des Trägers gebildet ist.

6. Verfahren zur Herstellung des Films mit photoreaktiven Beschichtungen nach einem der Ansprüche 1 bis 5, wobei
die auf einer optisch transparenten Trennlage gebildete photoreaktive Zusammensetzungsschicht mit dem Träger zusammengebracht wird, und
der Träger mit Licht bestrahlt wird, während die photoreaktive Zusammensetzungsschicht mit der optisch transparenten Trennlage bedeckt ist, wodurch die photoreaktive Zusammensetzungsschicht photopolymerisiert wird.

7. Verfahren zur Herstellung des Films mit photoreaktiven Beschichtungen nach einem der Ansprüche 1 bis 6, überdies umfassend:
Einstellen einer Photoreaktionsrate der photoreaktiven Zusammensetzungsschicht auf 20 % oder mehr beim ersten Umkehren des Trägers.

8. Vorrichtung zur Herstellung eines Films mit photoreaktiven Beschichtungen durch Applizieren von Licht von einer Beleuchtungseinrichtung auf eine auf einem Träger gebildete photoreaktive Zusammensetzungsschicht, um einer Photoreaktion unterzogen zu werden, wodurch eine Photoreaktionsproduktschicht erhalten wird, wobei die Vorrichtung umfasst:
eine Beschichtungseinrichtung zum Beschichten des Trägers mit Transparenz mit der photoreaktiven Zusammensetzungsschicht, während der Träger mit Transparenz in eine Richtung bewegt wird; und
eine Umkehreinrichtung zum Umkehren des Trägers, sodass er sich in eine Richtung entgegengesetzt der einen Richtung bewegt,
wobei die photoreaktive Zusammensetzungsschicht eine photopolymerisierbare Zusammensetzungsschicht ist, die eine Transparenz aufweist, die durch Licht von der Beleuchtungseinrichtung photopolymerisiert wird, um einen druckempfindlichen Haftfilm zu erhalten,
wobei ein Transportweg für den Träger serpentinenförmig ausgeführt ist, und
wobei die Beleuchtungseinrichtung den serpentinenförmig beförderten Träger nur von außen von mindestens entweder der untersten Ebene oder der obersten Ebene mit Licht bestrahlt.

## Revendications

1. Procédé de production d'un film de produit de photoréaction par l'application de lumière provenant d'un dispositif d'éclairage sur une couche à composition photoréactive formée sur un support pour la soumettre à une photoréaction, afin d'obtenir ainsi une couche de produit de photoréaction, le procédé comprenant :
la formation de la couche à composition photoréactive sur le support tout en déplaçant le support avec un film avec transparence dans une direction ;
l'inversion du support au moins une fois de manière à déplacer le support en direction opposée à ladite direction afin de générer un chemin de transport sinueux, moyennant quoi les supports se font face sur un parcours sinueux avant l'inversion et après l'inversion ; et
l'irradiation du support avec de la lumière provenant du dispositif d'éclairage, et la photopolymérisation de chaque couche à composition photoréactive sur le support sur un parcours sinueux tout en transmettant de la lumière à travers le support et la couche à composition photoréactive formée sur le support,
la couche à composition photoréactive étant une couche de composition photopolymérisable ayant un film avec transparence qui est photopolymérisé par de la lumière provenant du dispositif d'éclairage afin d'obtenir une couche adhésive sensible à la pression.

2. Procédé de production d'un film de produit de photoréaction selon la revendication 1, dans lequel
le support est irradié avec de la lumière provenant de l'extérieur d'au moins un étage parmi l'étage le plus bas et l'étage le plus haut du support, qui est inversé et transporté sur un parcours sinueux.

3. Procédé de production d'un film de produit de photoréaction selon la revendication 1 ou 2, dans lequel
l'intensité de la lumière transmise à travers le support sur le chemin de transport et la couche à composition photoréactive est contrôlée en ajustant une distance d'irradiation de la lumière grâce à la variation d'un diamètre d'un rouleau d'inversion du support.

4. Procédé de production d'un film de produit de photoréaction selon l'une quelconque des revendications 1 à 3, dans lequel
l'intensité de la lumière transmise à travers le support sur le chemin de transport et la couche à composition photoréactive est contrôlée par des tensions de sortie du dispositif d'éclairage.

5. Procédé de production d'un film de produit de photoréaction selon l'une quelconque des revendications 1 à 4, dans lequel
la couche à composition photoréactive est formée sur les faces aussi bien avant qu'arrière du support.

6. Procédé de production d'un film de produit de photoréaction selon l'une quelconque des revendications 1 à 5, dans lequel
la couche à composition photoréactive formée sur une membrane de séparation optique transparente est attachée au support, et
le support est irradié avec de la lumière pendant que la couche à composition photoréactive est recouverte avec la membrane de séparation optique transparente, moyennant quoi la couche à composition photoréactive est photopolymérisée.

7. Procédé de production d'un film de produit de photoréaction selon l'une quelconque des revendications 1 à 6, comprenant en outre :
le réglage d'un taux de photoréaction de la couche à composition photoréactive pour qu'il soit supérieur ou égal à 20 % lors de la première inversion du support.

8. Appareil de production d'un film de produit de photoréaction par l'application de lumière provenant d'un dispositif d'éclairage sur une couche à composition photoréactive formée sur un support pour la soumettre à une photoréaction, afin d'obtenir ainsi une couche de produit de photoréaction, l'appareil comprenant :
un dispositif de revêtement pour revêtir la couche à composition photoréactive sur le support avec transparence tout en déplaçant le support avec le film inversible dans une direction ; et
un dispositif d'inversion pour inverser le support de manière le déplacer en direction opposée à ladite direction,
la couche à composition photoréactive étant une couche de composition photopolymérisable ayant une transparence qui est photopolymérisé par de la lumière provenant du dispositif d'éclairage afin d'obtenir une couche adhésive sensible à la pression,
un chemin de transport pour le support étant construit sur un parcours sinueux, et
le dispositif d'éclairage irradiant le support transporté sur un parcours sinueux avec de la lumière provenant uniquement de l'extérieur d'au moins un étage parmi l'étage le plus bas et l'étage le plus haut.
